# EUROPEAN PATENT APPLICATION

(11) **EP 3 667 889 A1**
(43) Date of publication of application: **17.06.2020**
(21) Application number: 17925110.3
(22) Date of filing: 14.09.2017
(51) Int. Cl.: H02M 5/458, H02P 27/06

(54) **FREQUENCY CONVERTER, FREQUENCY CONVERTER ASSEMBLY, AND CONTROL METHOD THEREOF**

(71) Applicant: Siemens Aktiengesellschaft, 80333 München (DE)
(72) Inventor: ZHOU, Yajun, Nanjing Jiangsu 211100 (CN)
(74) Representative: Isarpatent
(86) International application number: PCT/CN2017/101748
(87) International publication number: WO 2019/051718

(57) **Abstract**

A frequency converter adapted to be connected to another frequency converter via a direct current bus is provided. The frequency converter comprises: a positive bus interface adapted to be interconnected with a positive bus interface of the other frequency converter; an external bleeder resistor interface adapted to be interconnected with an external bleeder resistor interface of the other frequency converter; and a first control logic which controls a parallel connection, between the frequency converter and the other frequency converter and realized by a direct current bus, to be turned on or off. A corresponding frequency converter assembly, a control method, and a computer readable storage medium are also provided.

## Description

### Technical field

The present invention relates to the field of frequency converters, in particular to a frequency converter, a frequency converter assembly and a control method thereof which are suitable for a common direct current bus scheme.

### Background art

Frequency converter loaded electric machines have two operating states: an electrical driving state and a generating state. When an electric machine is decelerating or the rotation speed of a load is higher than that of the electric machine, the electric machine is in a reverse generating state; the electricity that is generated will go back onto a DC bus of the frequency converter, leading to an increase in bus voltage. If this is not dealt with promptly, frequency converter overvoltage protection will be triggered. A conventional method is to consume this portion of energy using a braking resistor, but this method is relatively wasteful. Another method is to connect several frequency converter DC buses in parallel, and share this portion of surplus energy with other frequency converters for consumption, to avoid wastage. With regard to this second method, if frequency converters of different powers have their buses connected in parallel, then during normal operation, a low-power frequency converter will additionally bear the current demand of a high-power frequency converter, increasing the load of a rectifier bridge of the low-power frequency converter, with the result that the rectifier bridge of the low-power frequency converter is damaged very easily.

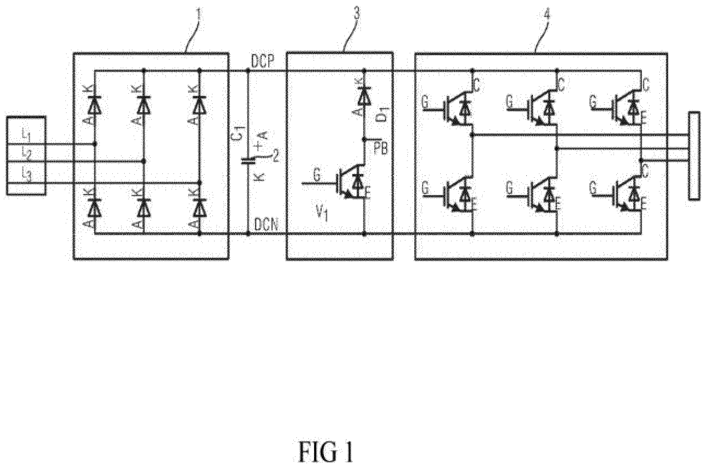

In addition, fig. 1 shows a main circuit block diagram of a known frequency converter. The frequency converter mainly comprises a rectifier bridge 1, a bus capacitor 2, a braking unit 3 and an inverter bridge 4. The braking unit 3 is used to bleed electrical energy arising from reverse generation. In addition, the inverter will also reserve three human-machine interface ports, namely a DCP (Direct Current Positive, positive DC bus) interface, a DCN (Direct Current Negative, negative DC bus) interface and a PB (Brake, external braking resistor) interface. DCP and DCN are DC bus interfaces, and PB is an external braking (or bleeder) resistor interface.

Research has found that when a low-power frequency converter and a high-power frequency converter have a common DC bus voltage, in normal operation the rectifier bridge 1 of the low-power frequency converter will additionally bear a current from the high-power frequency converter, leading to overloading of the low-power rectifier bridge 1; in mild cases, overheating protection of the low-power frequency converter will occur, and in serious cases, direct damage will occur. However, the common DC bus scheme mentioned above is also an environmentally friendly scheme which saves a lot of energy. Thus, there is an urgent need in the industry for a better scheme to eliminate the abovementioned problem of overloading of the rectifier bridge of the low-power frequency converter, in order to ensure the safe implementation of the common DC bus scheme.

### Content of the invention

In response to the abovementioned problem in the prior art, the present invention realizes intelligent control of a common DC bus, i.e. realizes a controllable common DC bus connection, on the basis of an existing frequency converter by means of circuit adjustment and operating mode control technology. Thus, the present invention can fully achieve effective results of a common DC bus scheme while avoiding problems such as overloading and overheating in a rectifier bridge of a low-power frequency converter. In addition, the present invention does not need to change the structural design of the existing frequency converter, is a low-cost improvement scheme, and has good application prospects.

According to one aspect of the present invention, a frequency converter is provided, which is suitable for connection to another frequency converter via a DC bus and comprises:
a positive bus interface, suitable for connection to a positive bus interface of the other frequency converter;
an external bleeder resistor interface, suitable for connection to an external bleeder resistor interface of the other frequency converter, and
a first control logic, controlling a bus parallel connection between the frequency converter and the other frequency converter to be turned on or off, said bus parallel connection being realized by means of the DC bus.

According to one embodiment, in the frequency converter described above, a bus voltage of the DC bus when the frequency converter is powered on and in a standby state is taken as a reference value;
when the bus voltage increases above the reference value by greater than or equal to a preset threshold value, the first control logic turns on the bus parallel connection, in order to realize bus voltage sharing between the frequency converter and the other frequency converter; otherwise, the first control logic turns off the bus parallel connection.

According to one embodiment, in the frequency converter described above,
the frequency converter comprises a first bus capacitor and a first braking unit connected in parallel on the DC bus, wherein the first braking unit further comprises a first IGBT and a first diode, the external bleeder resistor interface of the first braking unit is connected between an anode of the first diode and a collector of the first IGBT, one end of the first bus capacitor and a cathode of the first diode are together connected to the positive bus interface of the frequency converter, and another end of the first bus capacitor and an emitter of the first IGBT are together connected to a negative bus interface of the frequency converter.

According to one embodiment, in the frequency converter described above, when the frequency converter is in a reverse generating state and the bus voltage increases above the reference value by greater than or equal to a preset threshold value, the first control logic switches on the first IGBT, such that a voltage of the frequency converter enters the other frequency converter through the positive bus interface and returns to the negative bus interface of the frequency converter, to realize the bus voltage sharing.

According to another aspect of the present invention, a frequency converter assembly is provided, comprising: a first frequency converter, a second frequency converter and a DC bus, with positive bus interfaces of the first frequency converter and the second frequency converter being connected to each other and external bleeder resistor interfaces of the first frequency converter and the second frequency converter being connected to each other, wherein a first control logic of the first frequency converter controls a bus parallel connection between the first frequency converter and the second frequency converter to be turned on or off, said bus parallel connection being realized by means of the DC bus.

According to one embodiment, in the frequency converter assembly described above, a bus voltage of the DC bus when the first or second frequency converter is powered on and in a standby state is taken as a reference value;
when the bus voltage increases above the reference value by greater than or equal to a preset threshold value, the first control logic turns on the bus parallel connection between the first and second frequency converters, in order to realize bus voltage sharing between the first and second frequency converters; otherwise, the first control logic turns off the bus parallel connection between the first and second frequency converters.

According to one embodiment, in the frequency converter assembly described above,
the first frequency converter comprises a first bus capacitor and a first braking unit connected in parallel on the DC bus, wherein the first braking unit further comprises a first IGBT and a first diode, the external bleeder resistor interface of the first braking unit is connected between an anode of the first diode and a collector of the first IGBT, one end of the first bus capacitor and a cathode of the first diode are together connected to the positive bus interface of the first frequency converter, and another end of the first bus capacitor and an emitter of the first IGBT are together connected to a negative bus interface of the first frequency converter;
the second frequency converter comprises a second bus capacitor and a second braking unit connected in parallel on the DC bus, wherein the second braking unit further comprises a second IGBT and a second diode, the external bleeder resistor interface of the second braking unit is connected between an anode of the second diode and a collector of the second IGBT, one end of the second bus capacitor and a cathode of the second diode are together connected to the positive bus interface of the second frequency converter, and another end of the second bus capacitor and an emitter of the second IGBT are together connected to a negative bus interface of the second frequency converter.

According to one embodiment, in the frequency converter assembly described above, when the first frequency converter is in a reverse generating state and the bus voltage increases above the reference value by greater than or equal to a preset threshold value, the first control logic switches on the first IGBT, such that a voltage of the first frequency converter enters the second frequency converter through the positive bus interface and sequentially passes through the second bus capacitor, an anti-parallel-connected diode of the second IGBT, the external bleeder resistor interfaces and the first IGBT, returning to the negative bus interface of the first frequency converter, to realize the bus voltage sharing.

According to one embodiment, in the frequency converter assembly described above, the second frequency converter comprises a second control logic, which controls a bus parallel connection between the first frequency converter and the second frequency converter to be turned on or off, said bus parallel connection being realized by means of the DC bus; when the second frequency converter is in a reverse generating state and the bus voltage increases above the reference value by greater than or equal to a preset threshold value, the second control logic switches on the second IGBT, such that a voltage of the second frequency converter enters the first frequency converter through the positive bus interface and sequentially passes through the first bus capacitor, an anti-parallel-connected diode of the first IGBT, the external bleeder resistor interfaces and the second IGBT, returning to the negative bus interface of the second frequency converter, to realize the bus voltage sharing.

According to one embodiment, in the frequency converter assembly described above, the negative bus interfaces of the first and second frequency converters are disconnected from one another.

According to one embodiment, in the frequency converter assembly described above, the first frequency converter has a higher power than the second frequency converter.

According to another aspect of the present invention, a control method is provided, which is suitable for a frequency converter assembly formed of a first frequency converter, a second frequency converter and a DC bus, wherein positive bus interfaces of the first frequency converter and the second frequency converter are connected to each other and external bleeder resistor interfaces of the first frequency converter and the second frequency converter are connected to each other, the control method comprising:
controlling a bus parallel connection between the first frequency converter and the second frequency converter to be turned on or off, said bus parallel connection being realized by means of the DC bus.

According to one embodiment, in the control method described above, the control method comprises:
a. taking as a reference value a bus voltage of the DC bus when the first or second frequency converter is powered on and in a standby state;
b. when the bus voltage increases above the reference value by greater than or equal to a preset threshold value, a first control logic turning on the bus parallel connection between the first and second frequency converters, in order to realize bus voltage sharing between the first and second frequency converters; otherwise, the first control logic turning off the bus parallel connection between the first and second frequency converters.

According to one embodiment, in the control method described above,
the first frequency converter comprises a first bus capacitor and a first braking unit connected in parallel on the DC bus, wherein the first braking unit further comprises a first IGBT and a first diode, the external bleeder resistor interface of the first braking unit is connected between an anode of the first diode and a collector of the first IGBT, one end of the first bus capacitor and a cathode of the first diode are together connected to the positive bus interface of the first frequency converter, and another end of the first bus capacitor and an emitter of the first IGBT are together connected to a negative bus interface of the first frequency converter;
the second frequency converter comprises a second bus capacitor and a second braking unit connected in parallel on the DC bus, wherein the second braking unit further comprises a second IGBT and a second diode, the external bleeder resistor interface of the second braking unit is connected between an anode of the second diode and a collector of the second IGBT, one end of the second bus capacitor and a cathode of the second diode are together connected to the positive bus interface of the second frequency converter, and another end of the second bus capacitor and an emitter of the second IGBT are together connected to a negative bus interface of the second frequency converter.

According to one embodiment, in the control method described above, step b further comprises:
when the first frequency converter is in a reverse generating state and the bus voltage increases above the reference value by greater than or equal to a preset threshold value, the first control logic switching on the first IGBT, such that a voltage of the first frequency converter enters the second frequency converter through the positive bus interface and sequentially passes through the second bus capacitor, an anti-parallel-connected diode of the second IGBT, the external bleeder resistor interfaces and the first IGBT, returning to the negative bus interface of the first frequency converter, to realize the bus voltage sharing.

According to one embodiment, in the control method described above, the second frequency converter comprises a second control logic, which controls a bus parallel connection between the first frequency converter and the second frequency converter to be turned on or off, said bus parallel connection being realized by means of the DC bus, and step b further comprises:
when the second frequency converter is in a reverse generating state and the bus voltage increases above the reference value by greater than or equal to a preset threshold value, the second control logic switches on the second IGBT, such that a voltage of the second frequency converter enters the first frequency converter through the positive bus interface and sequentially passes through the first bus capacitor, an anti-parallel-connected diode of the first IGBT, the external bleeder resistor interfaces and the second IGBT, returning to the negative bus interface of the second frequency converter, to realize the bus voltage sharing.

According to one embodiment, in the control method described above, the first frequency converter has a higher power than the second frequency converter.

According to another aspect of the present invention, a computer-readable storage medium is provided, having a computer program stored thereon; when executed by a processor, the program realizes the control method as discussed above.

It should be understood that both the general description above and the detailed description below of the present invention are demonstrative and explanatory, and are intended to provide a further explanation of the present invention as described in the claims.

### Description of the accompanying drawings

The drawings are included in order to provide further understanding of the present invention; they are included and form part of the present application. The drawings show embodiments of the present invention, and together with this Description serve the function of explaining the principles of the present invention. In the drawings:
Fig. 1 shows a main circuit block diagram of a known frequency converter.
Fig. 2 shows a partial circuit diagram of a frequency converter assembly according to an embodiment of the present invention and the direction of current flow.
Fig. 3 shows a partial circuit diagram of a frequency converter assembly according to another embodiment of the present invention and the direction of current flow.

Key to labels used in the drawings:
- 1: rectifier bridge
- 2: bus capacitor
- 3: braking unit
- 4: inverter bridge
- 11: first frequency converter
- 12: second frequency converter
- 13: DC bus
- 21: first bus capacitor
- 22: first braking unit
- 23: first IGBT
- 24: first diode
- 31: second bus capacitor
- 32: second braking unit
- 33: second IGBT
- 34: second diode

### Particular embodiments

Embodiments of the present invention are now described by making detailed reference to the accompanying drawings. Detailed reference is now made to preferred embodiments of the present invention; examples thereof are shown in the drawings. Where at all possible, identical labels will be used in all of the drawings to indicate identical or similar parts. In addition, despite the fact that terms used in the present invention are chosen from publicly known and used terms, some terms mentioned in the description of the present invention might be chosen by the applicant according to his or her judgment, and the detailed meanings thereof are explained in the relevant parts of the description herein. In addition, it is a requirement that the present invention be understood not only through the actual terms used, but also through the meaning implied by each term.

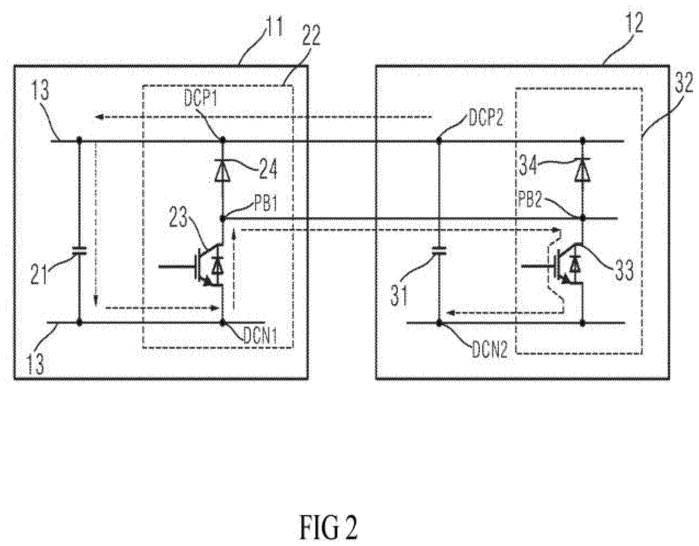

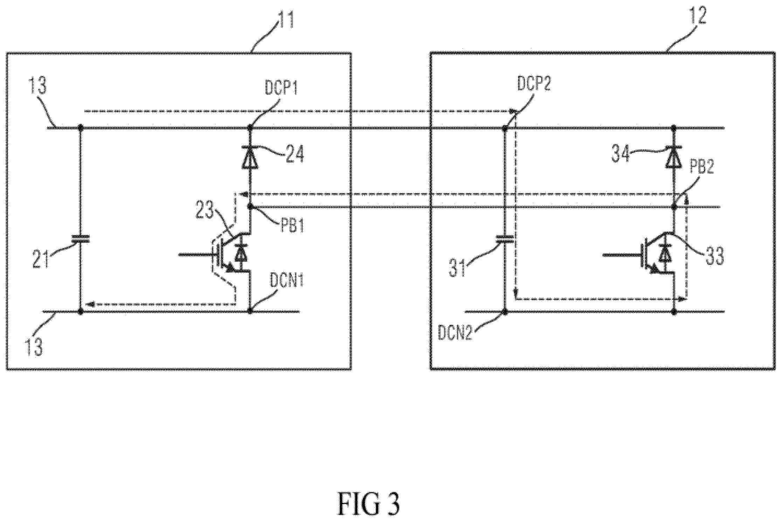

The basic principles and preferred embodiments of the present invention are discussed in more detail with reference to figs. 2 and 3.

Taking fig. 2 as an example, a frequency converter assembly according to the present invention mainly comprises: a first frequency converter 11, a second frequency converter 12 and a DC bus 13. The sizes of the powers of the first frequency converter 11 and the second frequency converter 12 may be different, but in the embodiment described below it is assumed that the power of the first frequency converter 11 is greater than the power of the second frequency converter 12. In particular, according to the present invention, positive bus interfaces DCP1 and DCP2 of the first frequency converter 11 and the second frequency converter 12 (i.e. interfaces on the frequency converters for connecting the positive bus) are connected to each other, and external bleeder resistor interfaces PB1 and PB2 of the first frequency converter 11 and the second frequency converter 12 (i.e. interfaces on the frequency converters for external bleeder/braking resistors) are connected to each other. In one embodiment, control logic (not shown) of the first frequency converter 11 controls a bus parallel connection between the first frequency converter 11 and the second frequency converter 12 to be turned on or off, said bus parallel connection being realized by means of the DC bus 13. In other words, in the abovementioned connection state, the control logic can control the bus parallel connection to be turned on or off as required. For example, the control logic can turn on the bus parallel connection when the first frequency converter 11 is in a reverse generating state, in order to realize bus voltage sharing, and turn off the bus parallel connection upon determining that bus sharing is not required, in order to avoid a situation in which a rectifier bridge of the second frequency converter 12 with the lower power bears a current demand of the first frequency converter 11 with the higher power.

Furthermore, as an example of a condition for determining whether there is a need for outward bus sharing, a bus voltage of the DC bus when the first frequency converter 11 (with the higher power) is powered on and in a standby state may first of all be taken as a reference value. Then, when the bus voltage increases above the reference value by greater than or equal to a preset threshold value (the preset threshold value may for example be 80 V - 120 V, more preferably 100 V), the control logic turns on the bus parallel connection between the first frequency converter 11 and the second frequency converter 12, in order to realize bus voltage sharing between the first frequency converter 11 and the second frequency converter 12; otherwise, the control logic turns off the bus parallel connection between the first and second frequency converters.

In the embodiments shown in figs. 2 and 3, the first frequency converter 11 may comprise a first bus capacitor 21 and a first braking unit 22 connected in parallel on the DC bus 13. The first braking unit 22 further comprises a first IGBT 23 and a first diode 24. The external bleeder resistor interface PB1 of the first braking unit 22 is connected between an anode of the first diode 24 and a collector of the first IGBT 23. One end of the first bus capacitor 21 and a cathode of the first diode 24 are together connected to the positive bus interface DCP1 of the first frequency converter 11; another end of the first bus capacitor 21 and an emitter of the first IGBT 23 are together connected to a negative bus interface DCN1 of the first frequency converter 11.

Correspondingly, the second frequency converter 12 may comprise a second bus capacitor 31 and a second braking unit 32 connected in parallel on the DC bus 13. The second braking unit 32 further comprises a second IGBT 33 and a second diode 34. The external bleeder resistor interface PB2 of the second braking unit 32 is connected between an anode of the second diode 34 and a collector of the second IGBT 33. One end of the second bus capacitor 31 and a cathode of the second diode 34 are together connected to the positive bus interface DCP2 of the second frequency converter 12. Another end of the second bus capacitor 31 and an emitter of the second IGBT 33 are together connected to a negative bus interface DCN2 of the second frequency converter 12.

Based on the circuit structure described above, when the first frequency converter 11 is in a reverse generating state and the bus voltage increases above a reference value by greater than or equal to a preset threshold value (e.g. 100 V), the control logic switches on the first IGBT 23, such that a voltage of the first frequency converter 11 enters the second frequency converter 12 through the positive bus interface DCP1 and sequentially passes through the second bus capacitor 31, an anti-parallel-connected diode of the second IGBT 33, the external bleeder resistor interfaces PB2 and PB1, and the first IGBT 23, returning to the negative bus interface DCN1 of the first frequency converter 11, to realize bus voltage sharing, as indicated by the flow direction of the dotted arrow in fig. 3.

In addition, according to another example, in a frequency converter assembly of the present invention, a second control logic (not shown) may also be disposed in the second frequency converter 12 (i.e. the frequency converter with the lower power). The second control logic and a first control logic are independent of each other, and the second control logic may also control a bus parallel connection between the first frequency converter 11 and the second frequency converter 12 to be turned on or off, said bus parallel connection being realized by means of the DC bus 13. For example, based on the circuit structure described above, when the second frequency converter 12 is in a reverse generating state and the bus voltage increases above a reference value by greater than or equal to the abovementioned preset threshold value (e.g. 100 V), the control logic switches on the second IGBT 33 (i.e. switches on the corresponding IGBT to establish a current loop), such that a voltage of the second frequency converter 12 enters the first frequency converter 11 through the positive bus interface DCP2 and sequentially passes through the first bus capacitor 21, an anti-parallel-connected diode of the first IGBT 23, the external bleeder resistor interfaces PB1 and PB2, and the second IGBT 33, returning to the negative bus interface DCN2 of the second frequency converter 12, to realize bus voltage sharing, as indicated by the flow direction of the dotted arrow in fig. 2.

In the circuit structure described above, the negative bus interface DCN1 of the first frequency converter 11 and the negative bus interface DCN2 of the second frequency converter 12 are disconnected from one another. In addition, the control method in the above embodiments may be recorded in the form of software in the first or second control logic, or may be stored in a suitable computer-readable storage medium and be read and executed by the first or second control logic.

In summary, the frequency converter assembly of the present invention makes use of devices in the interior of an existing frequency converter itself, with no need to add any other device, and realizes a controllable common DC bus connection by means of simple control. When the frequency converter uses the common DC bus usage, it is possible to switch off a bleeding function of the braking unit by means of the control logic, and invoke a common DC bus function. For example, when the bus voltage has met a certain condition, the corresponding braking unit IGBT is controlled to be turned on, realizing controllable parallel connection. In addition, turn-off is performed when there is no need to share the bus (e.g. lower than 100 V), to fully ensure that when the bus voltage is shared, the shared electrical energy comes from reverse generation energy and not rectifier bridge energy, avoiding a situation in which the rectifier bridge of the low-power frequency converter performs shunting on the high-power frequency converter, thereby being overloaded and suffering a damaging fault.

It will be obvious to those skilled in the art that the abovementioned demonstrative embodiments of the present invention could be subjected to various amendments and changes without deviating from the spirit and scope of the present invention. Thus, the present invention is intended to cover amendments and changes to the present invention which fall within the scope of the attached claims and equivalent technical solutions thereof.

## Claims

1. A frequency converter (11), suitable for connection to another frequency converter (12) via a DC bus (13), **characterized in that** the frequency converter (11) comprises:
a positive bus interface (DCP1), suitable for connection to a positive bus interface (DCP2) of the other frequency converter (12) ;
an external bleeder resistor interface (PB1), suitable for connection to an external bleeder resistor interface (PB2) of the other frequency converter (12), and
a first control logic, controlling a bus parallel connection between the frequency converter (11) and the other frequency converter (12) to be turned on or off, said bus parallel connection being realized by means of the DC bus (13).

2. The frequency converter (11) as claimed in claim 1, **characterized in that** a bus voltage of the DC bus (13) when the frequency converter (11) is powered on and in a standby state is taken as a reference value;
when the bus voltage increases above the reference value by greater than or equal to a preset threshold value, the first control logic turns on the bus parallel connection, in order to realize bus voltage sharing between the frequency converter (11) and the other frequency converter (12); otherwise, the first control logic turns off the bus parallel connection.

3. The frequency converter (11) as claimed in claim 2, **characterized in that**
the frequency converter (11) comprises a first bus capacitor (21) and a first braking unit (22) connected in parallel on the DC bus, wherein the first braking unit (22) further comprises a first IGBT (23) and a first diode (24), the external bleeder resistor interface (PB1) of the first braking unit (22) is connected between an anode of the first diode (24) and a collector of the first IGBT (23), one end of the first bus capacitor (21) and a cathode of the first diode (24) are together connected to the positive bus interface (DCP1) of the frequency converter (11), and another end of the first bus capacitor (21) and an emitter of the first IGBT (23) are together connected to a negative bus interface (DCN1) of the frequency converter (11).

4. The frequency converter (11) as claimed in claim 3, **characterized in that** when the frequency converter (11) is in a reverse generating state and the bus voltage increases above the reference value by greater than or equal to a preset threshold value, the first control logic switches on the first IGBT (23), such that a voltage of the frequency converter (11) enters the other frequency converter (12) through the positive bus interface (DCP1) and returns to the negative bus interface (DCN1) of the frequency converter (11), to realize the bus voltage sharing.

5. A frequency converter assembly, **characterized by** comprising: a first frequency converter (11), a second frequency converter (12) and a DC bus (13), with positive bus interfaces (DCP1, DCP2) of the first frequency converter (11) and the second frequency converter (12) being connected to each other and external bleeder resistor interfaces (PB1, PB2) of the first frequency converter (11) and the second frequency converter (12) being connected to each other, wherein a first control logic of the first frequency converter (11) controls a bus parallel connection between the first frequency converter (11) and the second frequency converter (12) to be turned on or off, said bus parallel connection being realized by means of the DC bus (13).

6. The frequency converter assembly as claimed in claim 5, **characterized in that** a bus voltage of the DC bus (13) when the first or second frequency converter is powered on and in a standby state is taken as a reference value;
when the bus voltage increases above the reference value by greater than or equal to a preset threshold value, the first control logic turns on the bus parallel connection between the first and second frequency converters, in order to realize bus voltage sharing between the first and second frequency converters; otherwise, the first control logic turns off the bus parallel connection between the first and second frequency converters.

7. The frequency converter assembly as claimed in claim 6, **characterized in that**
the first frequency converter (11) comprises a first bus capacitor (21) and a first braking unit (22) connected in parallel on the DC bus, wherein the first braking unit (22) further comprises a first IGBT (23) and a first diode (24), the external bleeder resistor interface (PB1) of the first braking unit (22) is connected between an anode of the first diode (24) and a collector of the first IGBT (23), one end of the first bus capacitor (21) and a cathode of the first diode (24) are together connected to the positive bus interface (DCP1) of the first frequency converter, and another end of the first bus capacitor (21) and an emitter of the first IGBT (23) are together connected to a negative bus interface (DCN1) of the first frequency converter;
the second frequency converter (12) comprises a second bus capacitor (31) and a second braking unit (32) connected in parallel on the DC bus, wherein the second braking unit (32) further comprises a second IGBT (33) and a second diode (34), the external bleeder resistor interface (PB2) of the second braking unit (32) is connected between an anode of the second diode (34) and a collector of the second IGBT (33), one end of the second bus capacitor (31) and a cathode of the second diode (34) are together connected to the positive bus interface (DCP2) of the second frequency converter, and another end of the second bus capacitor (31) and an emitter of the second IGBT (33) are together connected to a negative bus interface (DCN2) of the second frequency converter.

8. The frequency converter assembly as claimed in claim 7, **characterized in that** when the first frequency converter (11) is in a reverse generating state and the bus voltage increases above the reference value by greater than or equal to a preset threshold value, the first control logic switches on the first IGBT (23), such that a voltage of the first frequency converter enters the second frequency converter (12) through the positive bus interface (DCP1) and sequentially passes through the second bus capacitor (31), an anti-parallel-connected diode of the second IGBT (33), the external bleeder resistor interfaces (PB2, PB1) and the first IGBT (23), returning to the negative bus interface (DCN1) of the first frequency converter, to realize the bus voltage sharing.

9. The frequency converter assembly as claimed in claim 7, **characterized in that** the second frequency converter (12) comprises a second control logic, which controls a bus parallel connection between the first frequency converter (11) and the second frequency converter (12) to be turned on or off, said bus parallel connection being realized by means of the DC bus (13); when the second frequency converter (12) is in a reverse generating state and the bus voltage increases above the reference value by greater than or equal to a preset threshold value, the second control logic switches on the second IGBT (33), such that a voltage of the second frequency converter enters the first frequency converter (11) through the positive bus interface (DCP2) and sequentially passes through the first bus capacitor (21), an anti-parallel-connected diode of the first IGBT (23), the external bleeder resistor interfaces (PB1, PB2) and the second IGBT (33), returning to the negative bus interface (DCN2) of the second frequency converter, to realize the bus voltage sharing.

10. The frequency converter assembly as claimed in claim 7, **characterized in that** the negative bus interfaces (DCN1, DCN2) of the first and second frequency converters are disconnected from one another.

11. The frequency converter assembly as claimed in claim 5, **characterized in that** the first frequency converter has a higher power than the second frequency converter.

12. A control method, **characterized by** being suitable for a frequency converter assembly formed of a first frequency converter (11), a second frequency converter (12) and a DC bus (13), wherein positive bus interfaces (DCP1, DCP2) of the first frequency converter (11) and the second frequency converter (12) are connected to each other and external bleeder resistor interfaces (PB1, PB2) of the first frequency converter (11) and the second frequency converter (12) are connected to each other, the control method comprising:
controlling a bus parallel connection between the first frequency converter (11) and the second frequency converter (12) to be turned on or off, said bus parallel connection being realized by means of the DC bus (13).

13. The control method as claimed in claim 12, **characterized in that** the control method comprises:
a. taking as a reference value a bus voltage of the DC bus (13) when the first or second frequency converter is powered on and in a standby state;
b. when the bus voltage increases above the reference value by greater than or equal to a preset threshold value, a first control logic turning on the bus parallel connection between the first and second frequency converters, in order to realize bus voltage sharing between the first and second frequency converters; otherwise, the first control logic turning off the bus parallel connection between the first and second frequency converters.

14. The control method as claimed in claim 13, **characterized in that**
the first frequency converter (11) comprises a first bus capacitor (21) and a first braking unit (22) connected in parallel on the DC bus, wherein the first braking unit (22) further comprises a first IGBT (23) and a first diode (24), the external bleeder resistor interface (PB1) of the first braking unit (22) is connected between an anode of the first diode (24) and a collector of the first IGBT (23), one end of the first bus capacitor (21) and a cathode of the first diode (24) are together connected to the positive bus interface (DCP1) of the first frequency converter, and another end of the first bus capacitor (21) and an emitter of the first IGBT (23) are together connected to a negative bus interface (DCN1) of the first frequency converter;
the second frequency converter (12) comprises a second bus capacitor (31) and a second braking unit (32) connected in parallel on the DC bus, wherein the second braking unit (32) further comprises a second IGBT (33) and a second diode (34), the external bleeder resistor interface (PB2) of the second braking unit (32) is connected between an anode of the second diode (34) and a collector of the second IGBT (33), one end of the second bus capacitor (31) and a cathode of the second diode (34) are together connected to the positive bus interface (DCP2) of the second frequency converter, and another end of the second bus capacitor (31) and an emitter of the second IGBT (33) are together connected to a negative bus interface (DCN2) of the second frequency converter.

15. The control method as claimed in claim 14, **characterized in that** step b further comprises:
when the first frequency converter (11) is in a reverse generating state and the bus voltage increases above the reference value by greater than or equal to a preset threshold value, the first control logic switching on the first IGBT (23), such that a voltage of the first frequency converter enters the second frequency converter (12) through the positive bus interface (DCP1) and sequentially passes through the second bus capacitor (31), an anti-parallel-connected diode of the second IGBT (33), the external bleeder resistor interfaces (PB2, PB1) and the first IGBT (23), returning to the negative bus interface (DCN1) of the first frequency converter, to realize the bus voltage sharing.

16. The control method as claimed in claim 14, **characterized in that** the second frequency converter (12) comprises a second control logic, which controls a bus parallel connection between the first frequency converter (11) and the second frequency converter (12) to be turned on or off, said bus parallel connection being realized by means of the DC bus (13), and step b further comprises:
when the second frequency converter (12) is in a reverse generating state and the bus voltage increases above the reference value by greater than or equal to a preset threshold value, the second control logic switches on the second IGBT (33), such that a voltage of the second frequency converter enters the first frequency converter (11) through the positive bus interface (DCP2) and sequentially passes through the first bus capacitor (21), an anti-parallel-connected diode of the first IGBT (23), the external bleeder resistor interfaces (PB1, PB2) and the second IGBT (33), returning to the negative bus interface (DCN2) of the second frequency converter, to realize the bus voltage sharing.

17. The control method as claimed in claim 12, **characterized in that** the first frequency converter has a higher power than the second frequency converter.

18. A computer-readable storage medium, having a computer program stored thereon, **characterized in that** when executed by a processor, the program realizes the control method as claimed in any one of claims 12 - 17.
